# EUROPEAN PATENT APPLICATION

(11) **EP 4 362 052 A1**
(43) Date of publication of application: **01.05.2024**
(21) Application number: 23181957.4
(22) Date of filing: 28.06.2023
(51) Int. Cl.: H01H 31/00, H02B 13/075

(54) **AN EARTHING MECHANISM**

(30) Priority: 19.07.2022 IN 202241041261
(71) Applicant: ABB SCHWEIZ AG, 5400 Baden (CH)
(72) Inventor: BHANDARI, Sachin, 422009 Nashik (IN); KULKARNI, Bhushan, 422005 Nashik (IN); PARDESHI, Sagar, 422006 Nashik (IN)
(74) Representative: Zimmermann & Partner Patentanwälte mbB

(57) **Abstract**

A earthing mechanism 100 for earthing a switchgear 200 is disclosed. The earthing mechanism 100 includes a conductor plug 126 positioned in at least one insulator 120 such that at least a portion of the conductor plug 126 extends into the at least one insulator 120 to abut an inner surface of a cavity 156 defined along a vertical axis A-A' within the at least one insulator 120. A spindle 136 is disposed in the cavity 156 and a connector 138 is engaged with the spindle 136 where, the displacement of the spindle 136 displaces the connector 138 between a first position A and a second position B within the cavity 156. The connector 138 contacts the conductor plug 126 in the first position A for earthing the switchgear 200.

## Description

### TECHNICAL FIELD

Present disclosure relates in general to a earthing mechanism for earthing a switchgear. More particularly, the present disclosure relates to a earthing mechanism that is accommodated within an insulator of the switchgear.

### BACKGROUND OF THE DISCLOSURE

Electrical switchgears are used in electrical power distribution systems to distribute electrical power and selectively isolate electrical loads. Conventionally, switchgears are produced in many forms based on requirement. Typically, a switchgear includes a combination of electrical elements such as disconnectors, fuses, circuit breakers and a main distribution bus or a busbar. Switchgears are usually located where electrical distribution, isolation and/or protection for electrical load is required. These locations may include, for example, generators, factory floor, transformers, and substations.

Switchgears are employed to distribute electrical current. There are instances where excessive flow of current, damages the electrical equipment. Therefore, the electrical power distribution systems are employed with circuit breakers wherever necessary. The circuit breaker protects the electrical power system from damages caused by excess flow of current due to overload or short circuit. The switchgears are also provided with components such as busbars. These busbars are housed inside the switchgear for local high current power distribution. The circuit breaker in the switchgear may be reset either manually or automatically to resume normal operation of the electrical power distribution system once the overload or fault is rectified. In the event of failure of the switchgear, the faulty components in the switchgear may have to be repaired or replaced. For conducting the maintenance of the switchgear, the switchgear must initially be turned OFF. Subsequently, the remaining current in the switchgear must also be grounded so that the circuit breaker and the busbars may be safely accessed. Conventional earthing systems that ground the electricity are bulky and require large surface area within the switchgear.

The information disclosed in this background of the disclosure section is only for enhancement of understanding of the general background of the invention and should not be taken as an acknowledgement or any form of suggestion that this information forms the prior art already known to a person skilled in the art.

### SUMMARY OF THE DISCLOSURE

One or more shortcomings of systems are overcome, and additional advantages are provided through the assembly and the system as claimed in the present disclosure. Additional features and advantages are realized through the techniques of the present disclosure. Other embodiments and aspects of the disclosure are described in detail herein and are considered a part of the claimed disclosure.

In a non-limiting embodiment of the disclosure, a earthing mechanism for earthing a switchgear is disclosed. The earthing mechanism includes a conductor plug positioned in at least one insulator such that at least a portion of the conductor plug extends into the at least one insulator to abut an inner surface of a cavity defined along a vertical axis within the at least one insulator. A spindle is disposed in the cavity and a connector is engaged with the spindle. The displacement of the spindle displaces the connector between a first position and a second position within the cavity. The connector contacts the conductor plug in the first position for earthing the switchgear.

In an embodiment of the disclosure, the conductor plug is defined by an inner surface and an outer surface where, at least a portion of the outer surface of the conductor plug abuts the inner surface of the cavity.

In an embodiment of the disclosure, the inner surface of the conductor plug is defined with at least one groove.

In an embodiment of the disclosure, a conductor element is positioned the at least one groove of the conductor plug where, the conductor element conducts electricity from the conductor plug to the connector, upon contact with the connector.

In an embodiment of the disclosure, a guide member is positioned concentrically within the at least one insulator and an outer surface of the guide member abuts an inner surface of the at least one insulator.

In an embodiment of the disclosure, at least one extension protrudes from an inner surface of the guide member and at least one slot is defined on the outer surface of the connector to receive the at least one extension of the guide member.

In an embodiment of the disclosure, the spindle is defined with a threaded outer surface and is engaged with a threaded inner surface of the connector.

In an embodiment of the disclosure, the spindle is of a non-conductive material.

In an embodiment of the disclosure, a second shaft is connected to one end of the spindle by a conversion mechanism where, the rotation of the second shaft rotates the spindle and displaces the connector along the length of the spindle between the first position and the second position.

In an embodiment of the disclosure, a flexible coupling is coupled to the connector where, the flexible coupling conducts and routes electricity to a ground.

In an embodiment of the disclosure, one end of the connector is connected to the spindle and the opposing end of the connector is defined with a flat profile to abut the conductor plug and ground electricity when the connector is displaced to the first position.

In a non-limiting embodiment of the disclosure, a switchgear is disclosed. The switchgear includes an enclosure. A circuit breaker and a bus bar are housed in the enclosure and a earthing mechanism for earthing the switchgear is provided. The earthing mechanism includes a conductor plug positioned in at least one insulator such that at least a portion of the conductor plug extends into the at least one insulator to abut an inner surface of a cavity defined along a vertical axis within the at least one insulator. A spindle is disposed in the cavity and a connector is engaged with the spindle. The displacement of the spindle displaces the connector between a first position and a second position within the cavity. The connector contacts the conductor plug in the first position for earthing the switchgear.

In a non-limiting embodiment of the disclosure, at least three insulators are positioned on a casing in the switchgear and each of the at least three insulators include the earthing mechanism for earthing the switchgear. The earthing mechanism includes the conductor plug positioned in each of the at least three insulators such that at least a portion of the conductor plug extends into the cavity defined in each of the at least three insulators. The spindle is disposed in the cavity of each of the at least three insulators. The connector is movably engaged with the spindle where, the spindle is configured to displace the connector between the first position and the second position within the cavity. A second shaft is connected to one end of the spindle in the earthing mechanism of each of the at least three insulators by a conversion mechanism where, the rotation of the second shaft rotates the spindle and displaces the connector along the length of the spindle between the first position and the second position. The connector in the earthing mechanism of each of the at least three insulators, contacts the conductor plug in the first position for earthing the switchgear.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING FIGURES

The novel features and characteristics of the disclosure are set forth in the appended claims. The disclosure itself, however, as well as a mode of use, further objectives, and advantages thereof, will best be understood by reference to the following detailed description of embodiments when read in conjunction with the accompanying drawings. One or more embodiments are now described, by way of example only, with reference to the accompanying drawings wherein like reference numerals represent like elements and in which:
Figure 1 and Figure 2 illustrates a perspective view of a switchgear, in accordance with embodiments of the disclosure.
Figure 3 illustrates a side sectional view of the switchgear, in accordance with embodiments of the disclosure.
Figure 4 illustrates a perspective view of the earthing mechanism, in accordance with embodiments of the disclosure.
Figure 5 illustrates a central cut section view of insulators with a earthing mechanism in a second position, in accordance with embodiments of the disclosure.
Figure 6 illustrates a magnified sectional view of the earthing mechanism in a first position, in accordance with embodiments of the disclosure.
Figure 7 illustrates an exploded perspective view of the earthing mechanism, in accordance with embodiments of the disclosure.
Figure 8 illustrates a perspective view of the earthing mechanism, in accordance with embodiments of the disclosure.
Figure 9 illustrates a central cut section view of the insulators with the earthing mechanism in the first position, in accordance with embodiments of the disclosure.
Figure 10 illustrates a sectional view of the insulators as another embodiment of the earthing mechanism in a second position, in accordance with embodiments of the disclosure.
Figure 11 illustrates an exploded perspective view of the earthing mechanism of Figure 10.
Figure 12 illustrates a central cut sectional view of the insulators with another embodiment of the earthing mechanism from Figure 10 in a first position, in accordance with embodiments of the disclosure.

The figures depict embodiments of the disclosure for purposes of illustration only. One skilled in the art will readily recognize from the following description that alternative embodiments of the actuation assemblies illustrated herein may be employed without departing from the principles of the disclosure described herein

### DETAILED DESCRIPTION

The foregoing has broadly outlined the features and technical advantages of the present disclosure in order that the description of the disclosure that follows may be better understood. Additional features and advantages of the disclosure will be described hereinafter which form the subject of the disclosure. It should be appreciated by those skilled in the art that the conception and specific embodiments disclosed may be readily utilized as a basis for modifying or designing other system for carrying out the same purposes of the present disclosure. It should also be realized by those skilled in the art that such equivalent constructions do not depart from the scope of the disclosure. The novel features which are believed to be characteristic of the disclosure, as to its organization, together with further objects and advantages will be better understood from the following description when considered in connection with the accompanying figures. It is to be expressly understood, however, that each of the figures is provided for the purpose of illustration and description only and is not intended as a definition of the limits of the present disclosure.

While the disclosure is susceptible to various modifications and alternative forms, specific embodiments thereof have been shown by way of example in the drawings and will be described below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof used in the disclosure, are intended to cover a non-exclusive inclusions, such that an assembly comprises a list of components does not include only those components but may include other components not expressly listed or inherent to such assemblies. In other words, one or more elements in assemblies proceeded by "comprises" does not, without more constraints, preclude the existence of other elements or additional elements in the system or device.

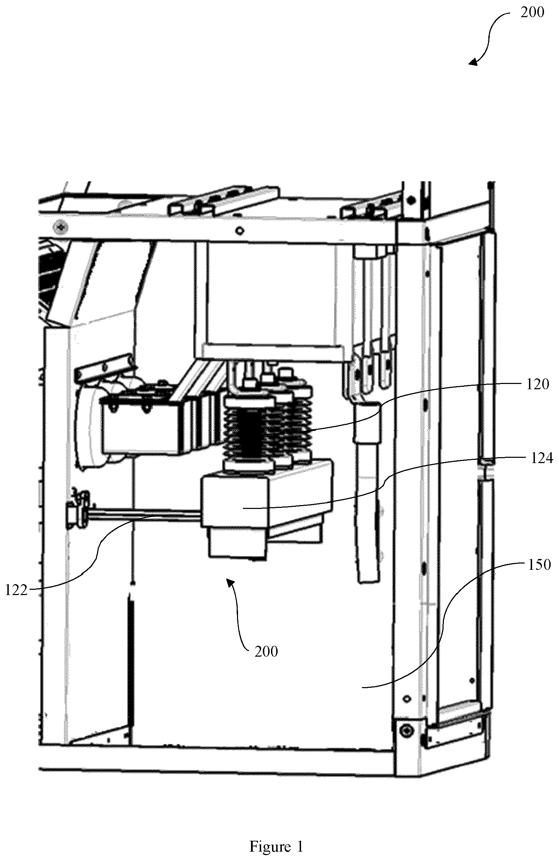

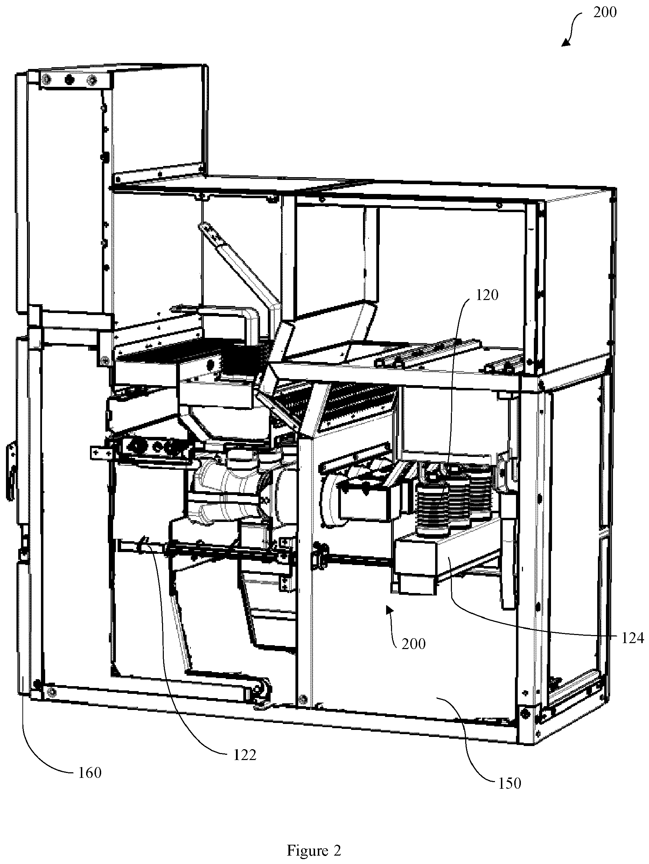

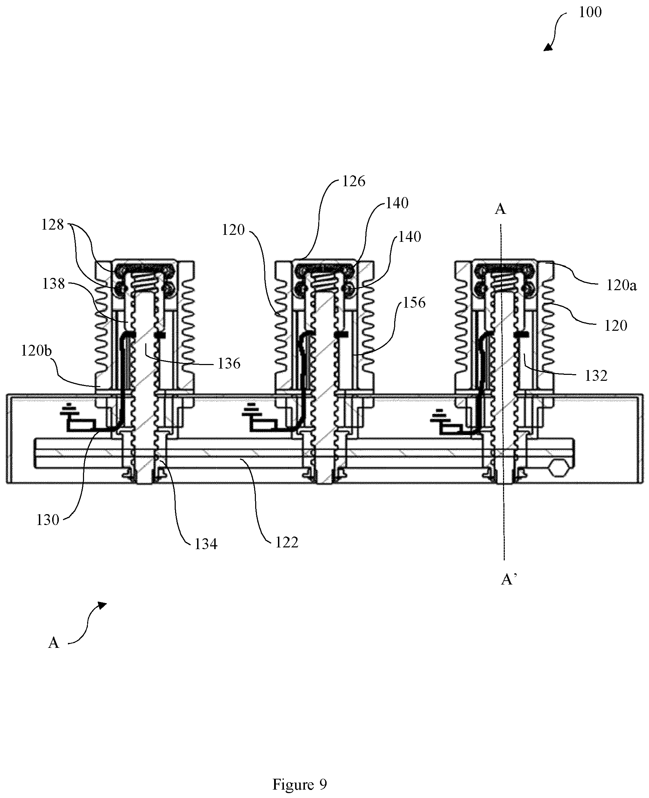

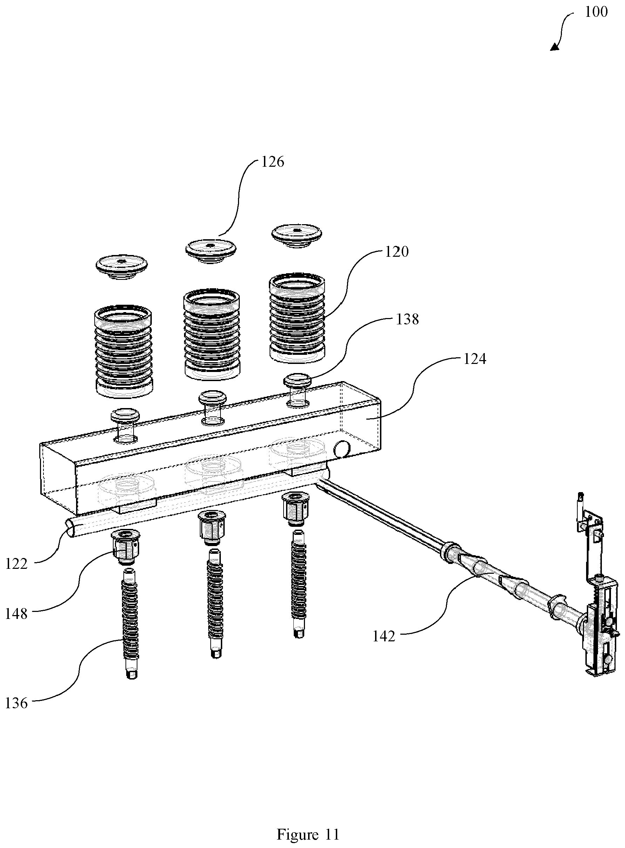

The following paragraphs describe the present disclosure with reference to Figs. 1 to 11. In the figures, the same element or elements which have similar functions are indicated by the same reference signs. For the purposes of promoting an understanding of the principles of the disclosure, reference will now be made to specific embodiments illustrated in the drawings and specific language will be used to describe the same. It will nevertheless be understood that no limitation of the scope of the invention is thereby intended, such alterations and further modifications in the illustrated methods, and such further applications of the principles of the invention as illustrated therein being contemplated as would normally occur to one skilled in the art to which the disclosure pertains.

The following detailed description is merely exemplary in nature and is not intended to limit application and uses. Further, there is no intention to be bound by any theory presented in the preceding background or summary or the following detailed description. It is to be understood that the disclosure may assume various alternative orientations and step sequences, except where expressly specified to the contrary. It is also to be understood that the specific devices or components illustrated in the attached drawings and described in the following specification are simply exemplary embodiments of the inventive concepts defined in the appended claims. Hereinafter, preferred embodiments of the present disclosure will be described referring to the accompanying drawings. While some specific terms directed to a specific direction will be used, the purpose of usage of these terms or words is merely to facilitate understanding of the present invention referring to the drawings.

Accordingly, it should be noted that meaning of these terms or words should not improperly limit the technical scope of the present invention. Also, it is to be understood that the phraseology and terminology used herein is for the purpose of description and should not be regarded as limiting. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. It is to be understood that this disclosure is not limited to the specific devices, methods, applications, conditions, or parameters described and/or shown herein, and that the terminology used herein is for the purpose of describing particular embodiments by way of example and is not intended to be limiting of the claimed invention. In the present document, the word "exemplary" is used herein to mean "serving as an example, instance, or illustration." Any embodiment or implementation of the present subject matter described herein as "exemplary" is not necessarily to be construed as preferred or advantageous over other embodiments.

Figure 1 illustrates a perspective view of a switchgear 200. The switchgear 200 may be configured within by an enclosure 150. A door 160 may be provided to access the enclosure 150 and in turn the switchgear 200. The enclosure 150 of the switchgear 200 may accommodate at least one electrical equipment. Further, the enclosure 150 of the switchgear 200 may include a circuit breaker that protects an electrical power system from damages caused by excess current due to overload or short circuit. The enclosure 150 may include at least one busbar [not shown in figures] that is connected to the at least one circuit breaker for isolating the at least one electrical equipment in the electric power distribution system and for distributing electric current between multiple components within the electrical power system. The circuit breaker may be housed within a circuit breaker compartment and is operable between a test position and a service position. The circuit breaker in the service position is equivalent to an operational state of the circuit breaker whereas, the circuit breaker in the test position is in a non-operation state of the circuit breaker. The enclosure 150 may also accommodate a casing 124 and at least one insulator 120 [hereinafter referred to as the insulator(s)] may be positioned on the casing 124 in the enclosure 150. Each of the at least one insulator 120 may accommodate a earthing mechanism 100.

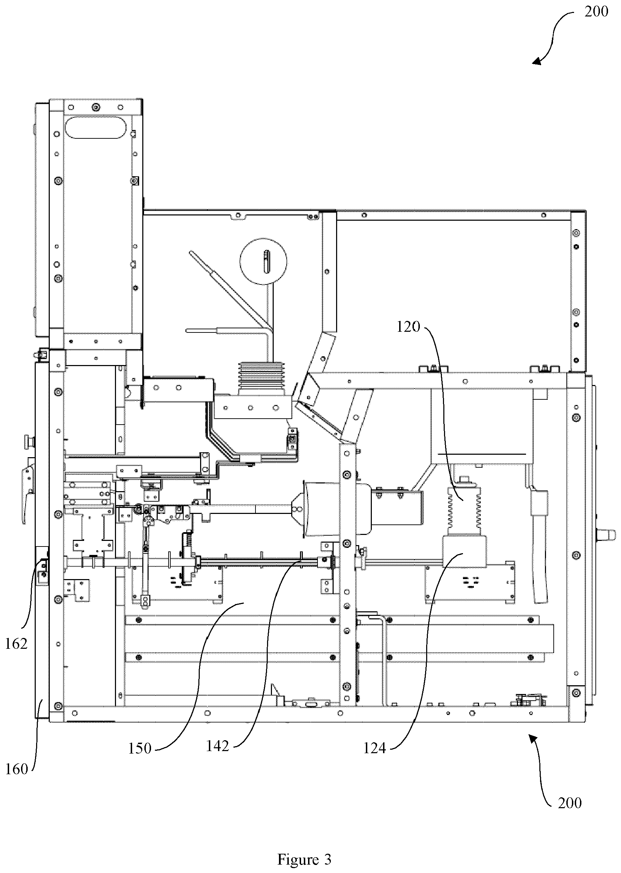

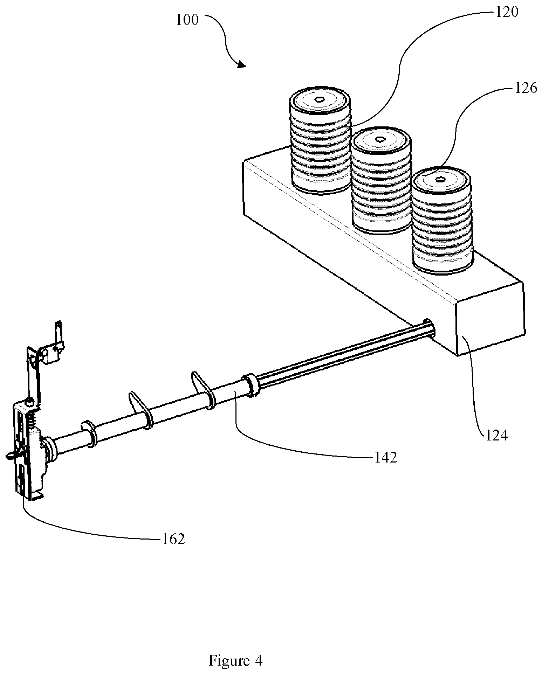

Figure 3 illustrates a side sectional view of the switchgear 200 and Figure 4 illustrates a perspective view of the earthing mechanism 100. The enclosure 150 of the switchgear 200 may accommodate a casing 124. The casing 124 may further accommodate the insulators 120 and the earthing mechanism 100 may be positioned within the insulators 120. The earthing mechanism 100 may be coupled to a first shaft 142. One end of the first shaft 142 may be coupled to a socket 162. The first shaft 142 may be positioned inside the enclosure 150 such that the end of the first shaft 142 with the socket 162 may protrude out of the door 160 of the enclosure 150. Further, an opposite end of the first shaft 142 [i.e., the opposite end is an end opposite to the one end where the socket 162 is connected] may extend into a provision defined in the casing 124 and may be connected to the earthing mechanism 100. The socket 162 may be operated in at least one of a clockwise direction and anti-clockwise direction for rotating the first shaft 142. Rotation of the first shaft 142 operates the earthing mechanism 100. In an embodiment, the socket 162 may be configured to receive a handle. Further, the handle may be operated in the clockwise or anti-clockwise direction and the socket 162 may accordingly rotate with the handle.

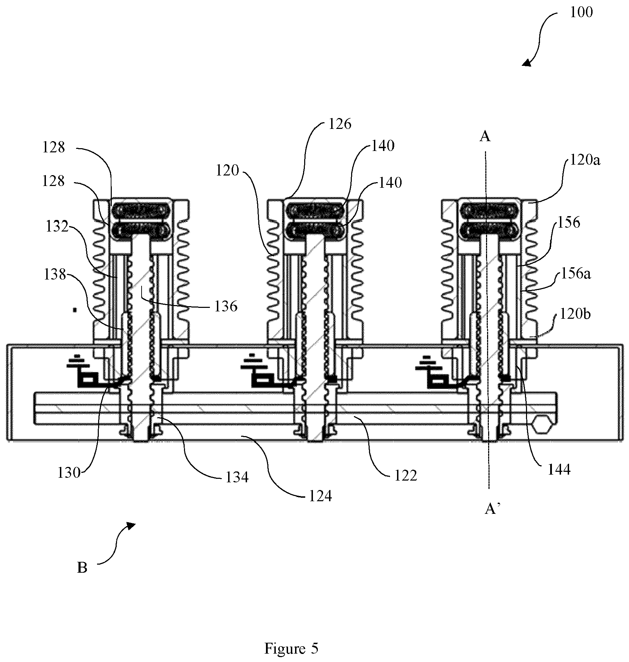

Further, the configuration of the earthing mechanism 100 is described in detail with reference to the Figure 5, Figure 6, and Figure 7. The insulators 120 may be defined with a cavity 156, where the cavity 156 may be configured to extend along a vertical axis (A-A') of the insulators 120. The vertical axis (A-A') may extend along a center portion of the insulators 120 and may extend along the vertical length of the insulators 120. The cavity 156 may also extend concentrically along the vertical axis (A-A') of the insulators 120. The cavity 156 may be a cutout or a hollow region that is defined along the length of the insulators 120. Further, the cavity 156 may also define an inner surface 156a. The inner surface 156a of the insulators 120 may be defined as a surface of the insulators 120 that extends along the circumference of the cavity 156 in the insulators 120.

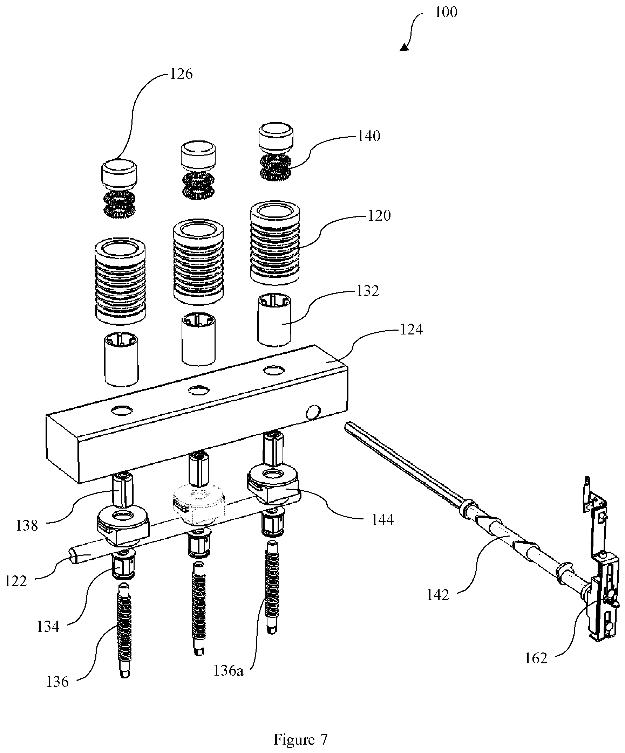

Further, the insulators 120 may also be defined by a top end 120a and a bottom end 120b. The bottom end 120b of the insulators 120 may herein be defined as the region/area of the insulators 120 that is accommodated or positioned on the casing 124. The opposite end of the bottom end 120b in the insulators 120 may be defined as the top end 120a of the insulators 120. The earthing mechanism 100 may include an earthing member 144 [seen from Figure 5 and Figure 7]. The earthing member 144 may also be defined with a central cavity or hollow portion. The diameter of the central cavity or hollow portion, defined in the earthing member 144, may be equivalent to the diameter of the cavity 156 defined in the insulators 120. Further, the earthing member 144 may also be positioned such that the center of the cavity in the earthing member 144 is aligned with the vertical axis (A-A') of the insulators 120. Further, the earthing member 144 may be positioned within the casing 124. The casing 124 may be defined by multiple plates. A top plate 164 of the casing 124 in this preferable embodiment may accommodate the insulators 120 and the opposite surface of the same top plate 164 in the casing 124 may be abutted with the earthing member 144. The bottom end 120b of the insulators 120 and the earthing member 144 may be positioned adjacent to each other and may be separated by the top plate 164 of the casing 124. Further the top plate 164 of the casing 124 may also be defined with a provision that extends along the vertical axis (A-A') of the insulators 120.

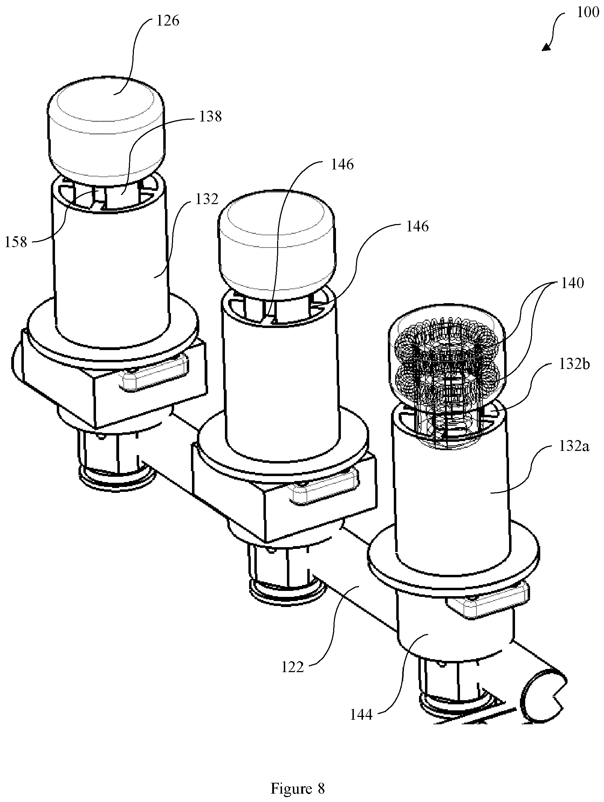

Reference is made to Figure 5, Figure 6 and Figure 8. The earthing mechanism 100 may also include a guide member 132. The guide member 132 may be a cylindrical shape [clearly seen from Figure 8] with a central cavity. The guide member 132 may also be defined by an outer surface 132a and an inner surface 132b. In a preferable embodiment, the diameter of the guide member 132 that is measured from a center of the guide member 132 to the outer surface 132a of the guide member 132 may be equivalent to the diameter of the cavity 156 in the insulators 120. Further, the inner surface 132b of the guide member 132 may be defined with a plurality of extensions 146. The extensions 146 may be configured to extend throughout the length of the guide member 132 from the inner surface 132b. In this preferable embodiment, the extensions 146 may be positioned at 90 degrees away from each other along the inner surface 132b of the guide member 132. In a preferable embodiment, the thickness of the extensions 146 may be equivalent to the thickness of the guide member 132 defined between the outer surface 132a and the inner surface 132b of the guide member 132. The guide member 132 may further be accommodated or positioned in the cavity 156 of the insulators 120. The guide member 132 may be positioned to rest on the top plate 164 of the casing 124 and may be positioned within the cavity 156 of the insulators 120. The guide member 132 may also be positioned such that the center of the guide member 132 lies along the vertical axis (A-A') of the cavity 156. The guide member 132 may be positioned such that the outer surface 132a of the guide member 132 abuts or lies adjacent to the inner surface 156a of the cavity 156 in the insulators 120. In a preferable embodiment, the guide member 132 may be fixedly positioned within the cavity 156. In an embodiment, the outer surface 132a of the guide member 132 may be fixedly connected to the inner surface 156a of the cavity 156 in the insulators 120. In an embodiment, the guide member 132 may be of a flexible, non-conductive material.

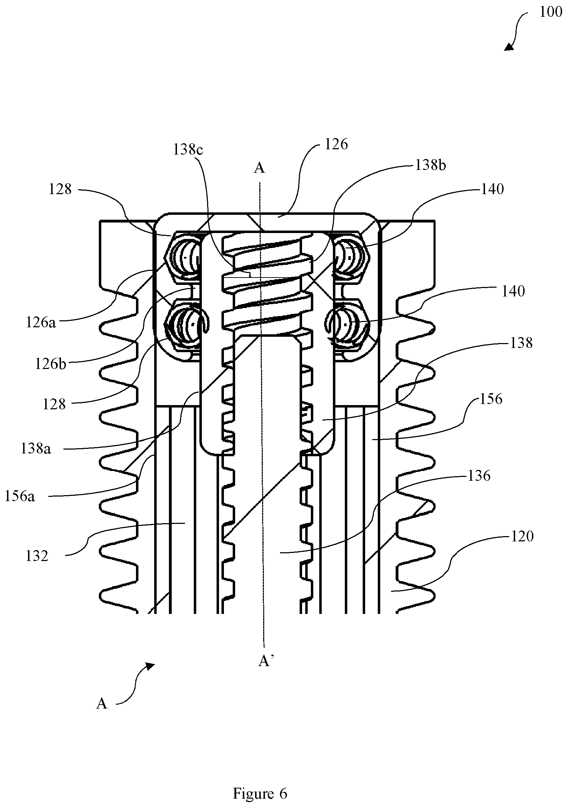

The earthing mechanism 100 may also include a conductor plug 126. The conductor plug 126 may be a cylindrical shaped component with a central cavity. One end of the conductor plug 126 may be enclosed which may form a contact portion whereas the opposing end of the conductor plug 126 may be open to be seated onto the insulator. The conductor plug 126 may also be defined by an outer surface 126a and an inner surface 126b. The outer surface 126a of the conductor plug 126 may be herein defined as the surface that extends vertically along the conductor plug 126 and is defined along the outer circumference of the conductor plug 126. The inner surface 126b of the conductor plug 126 may be defined with a plurality of grooves 128 [hereinafter referred to as the grooves]. The grooves 128 may be defined to extend along a plane that is perpendicular to the vertical axis (A-A'). In this preferable embodiment, at least two grooves 128 may be defined along the inner surface 126b of the conductor plug 126. Both the at least two grooves 128 may be defined along planes that are parallel to each other. Further, the planes of both the grooves 128 that are parallel to each other may also be oriented perpendicular to the vertical axis (A-A') of the insulators 120. The earthing mechanism 100 may also include at least one conductor element 140 [hereinafter referred to as the conductor element]. The conductor element 140 may be positioned within the groove 128 of the conductor plug 126. In this preferable embodiment, the conductor element 140 may be in the shape of a ring and the conductor element 140 may be configured to abut the inner surface 126b of the conductor plug 126. In this preferable and exemplary embodiment, the conductor plug 126 and the conductor element 140 may be of electrically conductive material. In this preferable embodiment, the conductor plug 126 may be connected to the at least one electrical equipment inside the switchgear 200. The conductor plug 126 may be configured to receive the electricity from the at least one electrical equipment inside the switchgear 200. The conductor plug 126 may further be positioned at the top end 120a of the insulators 120 [clearly seen from Figure 6]. Further, the conductor plug 126 may be positioned in the cavity 156 such that a center of the conductor plug 126 lies along the vertical axis (A-A') of the insulators 120. The outer surface 126a of the conductor plug 126 may be configured to abut or lie adjacent to the inner surface 156a of the cavity 156 in the insulators 120. The conductor plug 126 may be positioned such that the enclosed region or a top region of the conductor plug 126 lies flush with the top end of the insulators 120. In an embodiment, the conductor plug 126 may be accommodated within the cavity 156 of the insulators 120 by any known methods including but not limited to press fitting.

Further, the first shaft 142 may be configured to extend into a plate of the casing 124 that lies perpendicular to the top plate 164 of the casing 124. The casing 124 may be defined with a provision and the provision of the casing may receive the first shaft 142. One end of the first shaft 142 may extend into the provision of the casing 124 whereas the opposing end of the first shaft 142 may be configured to be coupled to the socket 162. The socket 162 protrudes out of the door 160 for providing access to a user. The end of the first shaft 142 that extends into the provision defined in the casing 124 may be coupled to a second shaft 122 [seen from Figure 7]. The second shaft 122 in a preferable embodiment may be extend in a direction perpendicular to the first shaft 142. The first shaft 142 may be coupled to the second shaft 122 such that, the rotation of the first shaft 142 may in turn rotate the second shaft 122. The second shaft 122 may be accommodated within the casing 124 and the second shaft 122 may extend through the length of the casing 124.

The earthing mechanism 100 may further include a spindle 136. The spindle 136 in this preferable and exemplary embodiment may be made of a non-conductive material. The spindle 136 may be an elongated and cylindrical shaped component. The surface of the spindle 136 may be defined with a threaded profile. Further, a top region and a bottom region of the spindle 136 may be defined as plain surfaces. The region/area of the spindle 136 extending between the top region and the bottom region may be defined with a threaded profile 136a. Further, the bottom region of the spindle 136 may be coupled to the second shaft 122. The spindle 136 may be coupled to the second shaft 122 by means of a conversion mechanism 134. The conversion mechanism 134 may be any known mechanism which translates the rotation of the second shaft 122 into the rotation of the spindle 136. The spindle 136 may be positioned within the cavity 156 and the spindle 136 may be configured to rotate about the vertical axis (A-A') of the cavity 156. Further, the diameter of the spindle 136 may be significantly smaller than the diameter of the guide member 132 and the spindle 136 may be positioned within the guide member 132. The spindle 136 is also positioned along the vertical axis (A-A') of the insulator 120. The height of the spindle 136 is configured such that the spindle 136 partially extends into the hollow region of the conductor plug 126. Further, the spindle 136 is coupled with second shaft 122 and the second shaft 122 is positioned in the casing 124 such that the top region of the spindle 136 extends into the hollow region of the conductor plug 126. Further, the top region of the spindle 136 may be positioned at a pre-determined distance away from the inner surface 126b of the conductor plug 126. The spindle 136 may lie proximal to the conductor element 140 in the conductor plug 126. The spindle 136 is herein positioned to not come in contact with the conductor plug 126 or the conductor element 140 in the conductor plug 126. The rotation of the first shaft 142 may rotate the second shaft 122. Further, conversion mechanism 134 may convert the rotation of the second shaft 122 into the rotation of the spindle 136. The spindle 136 may rotate within the cavity 156 and the spindle 136 may not come in contact with the guide member 132 and the conductor plug 126 while rotating within the cavity 156 of the insulators 120. Further, the spindle 136 may be disposed within the insulators 120 such that the threaded profile 136a on the spindle 136 is configured to be positioned concentrically with respect to the inner surface 156a of the insulators 120. The spindle 136 is positioned within the cavity 156 of the insulators 120 such that a pre-determined distance is configured between the threaded profile 136a of the spindle 136 and the inner surface 156a of the insulators 120.

The earthing mechanism 100 may further include a connector 138. The connector 138 may also be a cylindrical shaped component with a central opening 138c. The connector 138 may also be defined by an outer surface 138a and an inner surface 138b. The outer surface 138a may be defined as the surface that extends vertically along an outer circumference of the connector 138. Further, the inner surface 138b may be defined as the surface that extends vertically inside the central opening 138c of the connector 138. The inner surface 138b may also be defined with threads. The threads on the inner surface 138b of the connector 138 may be configured to complement or mesh with the threaded profile 136a of the spindle 136. In a preferable and exemplary embodiment, the overall length of the connector 138 may be twice the length of the top region of the spindle 136. Further, the outer surface 138a of the connector 138 may be defined with at least one slot 158 [clearly seen from the Figure 8]. The at least one slot 158 (herein after referred to as the slot) may extend throughout the length of the connector 138. Further, the at least one slot 158 may herein be defined as a depression on the outer surface 138a of the connector 138. The width of the slot 158 may be equal to or slightly greater than the width of the extensions 146 on the inner surface 132b of guide member 132. The at least one slot 158 in this preferable and exemplary embodiment may be defined on the outer surface 138a of the connector 138 to orient 90 degrees apart from each other. The radius of the connector 138 measured from a center of the connector 138 to the outer surface of the connector 138 may be equivalent to the radius/distance between the vertical axis (A-A') and the surface of the conductor element 140 housed in the conductor plug 126. The connector 138 may also be positioned within the cavity 156 of the insulators 120. The connector 138 may be configured to extend/lie along the vertical axis (A-A') of the insulators 120. The connector 138 may be movably coupled to the spindle 136. The threads defined on the inner surface 138b of the connector 138 may engage with the threaded profile 136a of the spindle 136. Further, the connector 138 may be positioned inside the guide member 132 such that the slot 158 defined on the outer surface 138a of the connector 138 receives the extension 146 of the guide member 132. The extension 146 of the guide member 132 may guide the movement of the connector 138 along the spindle 136. The connector 138 may be of an electrically conductive material. The earthing mechanism 100 further includes a flexible coupling 130. The flexible coupling 130 may be connected to the connector 138 at one end and the opposing end of the flexible coupling 130 may be connected to the earthing member 144. The flexible coupling 130 may be made of an electrically conductive material and may ground the electricity in the switchgear 200 by conducting the electricity from the connector 138 to the earthing member 144. The flexible coupling 130 may be configured to extend between the extensions 146 of the guide member 132. The flexible coupling 130 may be positioned or may extend between the inner surface 132b of the guide member 132 and the outer surface 138a of the connector 138.

As seen from Figure 7, and in an exemplary embodiment, three insulators 120 may be provided in the switchgear 200. The casing 124 may be defined with three provisions for accommodating the insulators 120. Further, each of the three insulators 120 may accommodate the earthing mechanism 100. The spindle 136 of the earthing mechanism 100 in each of the insulators 120 may be connected to the second shaft 122 through the conversion mechanism 134.

The working of the earthing mechanism 100 is described in detail below. Reference is made to the Figure 5. The connector 138 may be in a second position (S) as seen from the Figure 5. The connector 138 in the second position (B) lies proximal to the bottom region of the spindle 136. The connector 138 in the second position (B) may partially lie within the casing 124 and may be proximal to the bottom end 120b of the insulators 120. The connector 138 in the second position (B) may not lie in contact with the conductor element 140 of the conductor plug 126. Further, if a user intends to access the electrical components in the switchgear 200 for servicing the electrical components, the user may cut OFF the power to the electrical components or the user may turn OFF the switchgear 200. Subsequently, the remaining electricity in the electrical components of the switchgear 200 is to be drained or grounded for accessing the electrical components in a safe manner. The user may operate the earthing mechanism 100 to the first position (A) for grounding the remaining electricity in the electrical components of the switchgear 200. The user may operate/rotate the socket 162 that protrudes from the door 160 of the switchgear 200. Since the first shaft 142 is coupled to the second shaft 122, the rotation of the first shaft 142 causes the second shaft 122 to rotate within the casing 124. The rotation of the second shaft 122 rotates the spindle 136 along the vertical axis (A-A') by the conversion mechanism 134. As the spindle 136 rotates abouts the vertical axis (A-A'), the connector 138 may begin to traverse upwardly towards the top region of the spindle 136. Reference is made to Figure 6 and Figure 8 which depict the earthing mechanism 100 in the first position (A). The connector 138 may be traversed upwardly by the rotation of the spindle 136. The connector 138 may be traversed to the top region of the spindle 136 and the connector 138 may lie in contact with the conductor elements 140 of the conductor plug 126.

The electrical components in the switchgear 200 may be connected to the conductor plug 126. The electricity from the electrical components in the switchgear 200 may travel to the conductor plug 126. Subsequently, the electricity from conductor plug 126 is transmitted to the conductor elements 140 positioned in the conductor plug 126. The conductor elements 140 further transmit the electricity to the connector 138 that lies in the first position (A) and is in contact with the conductor elements 140. Further, the electricity from the connector 138 may be travel through the flexible coupling 130 and the electricity may be grounded at the earthing member 144. The user may subsequently access the electrical components in the switchgear 200. After the electrical components are serviced, the earthing mechanism 100 may be operated back to the second position (B) where the connector 138 is proximal to the bottom region of the spindle 136. Subsequently, the switchgear 200 may be actuated to an operational state. The alignment/configuration between the threaded profile 136a of the spindle 136 and the threads defined on the inner surface 138b of the connector 138 may be configured such that a clockwise or anti-clockwise rotation of the spindle 136 may traverse the connector 138 to the first position (A) or the second position (B).

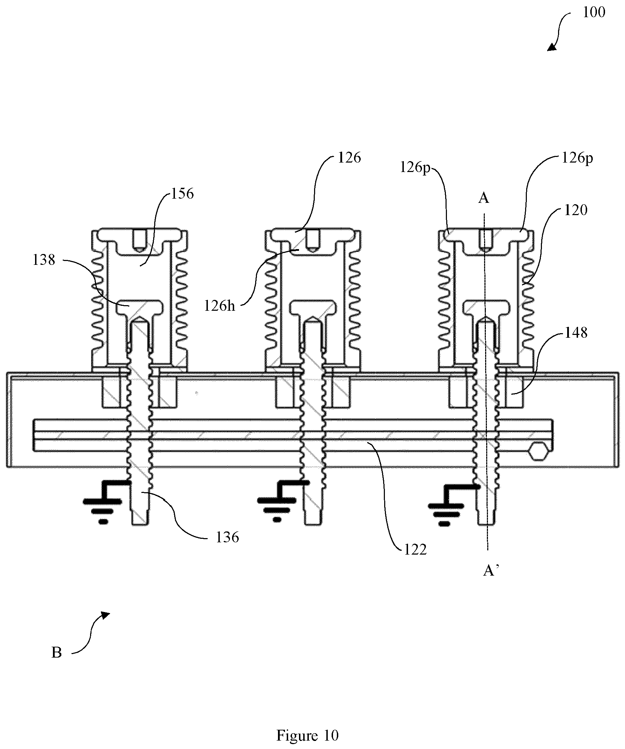

Reference is made to Figure 10, Figure 11 and Figure 12 and an embodiment of the earthing mechanism 100 is described below. The earthing mechanism 100 may be coupled to the first shaft 142. One end of the first shaft 142 may be coupled to the socket 162. Further, the opposite end of the first shaft 142 may extend into the provision defined in the casing 124 and may be connected to the earthing mechanism 100. The socket 162 may be operated in at least one of a clockwise direction and anti-clockwise direction for rotating the first shaft 142 and for operating the earthing mechanism 100. The insulators 120 may be defined with the cavity 156. The cavity 156 may be configured to extend along the vertical axis (A-A') of the insulators 120. The vertical axis (A-A') may extend along the center of the insulators 120 and may extend along the length of the insulators 120. The cavity 156 may also extend along the vertical axis (A-A') of the insulators 120. The cavity 156 may also define the inner surface 156a and the inner surface 156a may be the surface of the insulators 120 that is defined along the circumference of the cavity 156 in the insulators 120. Further, the insulators 120 may also be defined by the top end 120a and the bottom end 120b. The bottom end 120b of the insulators 120 may herein be defined as the region/area of the insulators 120 that is accommodated or positioned on the casing 124. The opposing end of the bottom end 120b in the insulators 120 may be defined as the top end 120a of the insulators 120.

The earthing mechanism 100 may include a bushing 148. The bushing 148 may also be defined with a cavity. The diameter of the cavity defined in the bushing 148 may be equivalent to the diameter of the cavity 156 defined in the insulators 120. Further, the bushing 148 may also be positioned such that a central portion of the cavity in the bushing 148 is aligned with the vertical axis (A-A') of the insulators 120. Further, the cavity of the bushing 148 may be defined by an inner surface and the inner surface of the cavity may be defined with threads. The bushing 148 may be positioned within the casing 124. The casing 124 may be defined by multiple plates. The top plate 164 of the casing 124 in this preferable embodiment may accommodate the insulators 120 and the opposite surface of the same top plate 164 in the casing 124 may be abutted with the bushing 148. The bottom end 120b of the insulators 120 and the bushing 148 may be positioned adjacent to each other and may be separated by the top plate 164 of the casing 124. Further the top plate 164 of the casing 124 may also be defined with the provision that extends along the vertical axis (A-A') of the insulators 120.

The earthing mechanism 100 may also include the conductor plug 126. The conductor plug 126 may be defined with a protrusion 126p and a head 126h. The protrusions 126p may extend outwardly and may be configured to be accommodated on the top end 120a of the insulators 120. The top end 120a of the insulators 120 may be defined with cutouts. The protrusions 126p of the conductor plug 126 may be accommodated within the cutouts at the top end 120a of the insulators 120. The conductor plug 126 may be positioned in the cavity 156 such that a center of the conductor plug 126 lies along the vertical axis (A-A') of the insulators 120 and the head 126h of the conductor plug 126 is positioned within the cavity 156 of the insulators 120. The conductor plug 126 may be positioned such that a top region of the conductor plug 126 lies flush with the top end of the insulators 120. In this preferable and exemplary embodiment, the conductor plug 126 and the conductor element 140 may be of electrically conductive material. In this preferable embodiment, the conductor plug 126 may be connected to the at least one electrical equipment inside the switchgear 200. The conductor plug 126 may be configured to receive the electricity from the at least one electrical equipment inside the switchgear 200.

Further, the first shaft 142 may be configured to extend into a plate of the casing 124 that lies perpendicular to the top plate 164 of the casing 124. The casing 124 may be defined with a provision and the provision of the casing 124 may receive the first shaft 142. One end of the first shaft 142 may extend into the provision of the casing 124 whereas the opposing end of the first shaft 142 may be configured to be coupled to the socket 162 and the socket 162 protrudes out of the door 160. The end of the first shaft 142 that extends into the provision defined in the casing 124 may be coupled to a second shaft 122 [seen from Figure 7]. The second shaft 122 in a preferable embodiment may be extend in a direction perpendicular to the first shaft 142. The first shaft 142 may be coupled to the second shaft 122 such that, the rotation of the first shaft 142 may rotate the second shaft 122. The second shaft 122 may be accommodated within the casing 124 and the second shaft 122 may extend through the length of the casing 124.

The earthing mechanism 100 may further include a spindle 136. The spindle 136 in this preferable and exemplary embodiment may be made of a non-conductive material. The spindle 136 may be an elongated and cylindrical shaped component. The surface of the spindle 136 may be defined with a threaded profile. The region/area of the spindle 136 extending between the top region and the bottom region may be defined with a threaded profile 136a. The threaded profile 136a of the spindle 136 may be configured to engage with the threads defined along the inner surface of the bushing 148. Further, the bottom region of the spindle 136 may be coupled to the second shaft 122. The spindle 136 may be coupled to the second shaft 122 by means of a conversion mechanism 134. The conversion mechanism 134 may be any known mechanism which translates the rotation of the second shaft 122 into the rotation of the spindle 136. The spindle 136 may be positioned within the cavity 156 and the spindle 136 may be configured to rotate about the vertical axis (A-A') of the cavity 156. The spindle 136 is also positioned along vertical axis (A-A') of the insulator 120. The spindle 136 in the preferable embodiment may be made of an electrically conductive material. Further, the spindle 136 in this preferable embodiment may be grounded/may be connected to a component that grounds the electricity form the switchgear 200. The earthing mechanism 100 may further include a connector 138. The connector 138 may be made of an electrically conductive material. The connector 138 may be fixedly coupled to the top region of the spindle 136. The connector 138 may traverses with the movement of the spindle 136 and the connector 138 may be traverse within the cavity 156 of the insulators 120. As seen from the Figure 10, and in an exemplary embodiment, three insulators 120 may be provided in the switchgear 200. The casing 124 may be defined with three provisions for accommodating the insulators 120. Further, each of the three insulators 120 may accommodate the earthing mechanism 100. The spindle 136 of the earthing mechanism 100 in each of the insulators 120 may be connected to the second shaft 122 through the conversion mechanism 134.

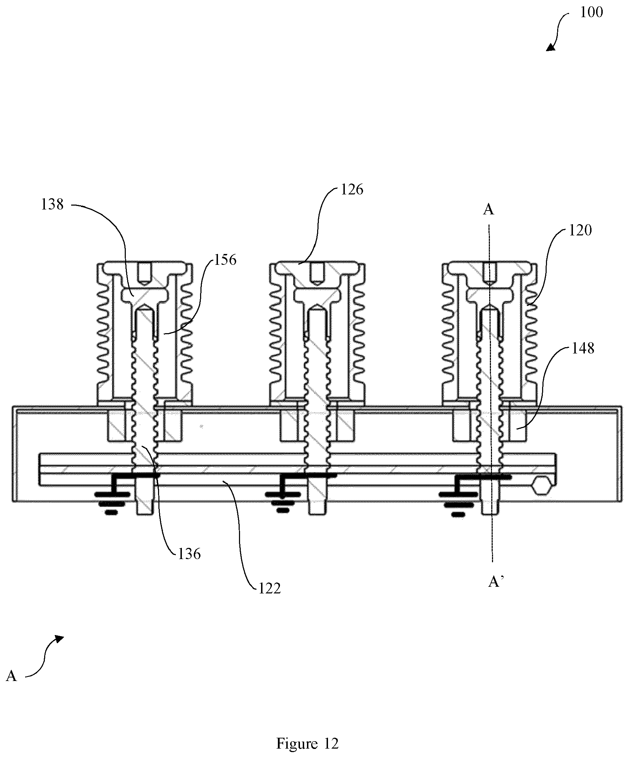

In an embodiment, working of the earthing mechanism 100 is described in detail below. Reference is made to the Figure 10. The connector 138 may be in a second position (S) as seen from the Figure 10. The connector 138 in the second position (B) lies proximal to the bottom end 120b of the insulators 120. The connector 138 in the second position (B) may not lie in contact with the conductor plug 126. Further, if a user intends to access the electrical components in the switchgear 200 for servicing the electrical components, the user may cut OFF the power to the electrical components or the user may turn off the switchgear 200. Subsequently, the remaining electricity in the electrical components of the switchgear 200 is to be drained or grounded for accessing the electrical components in a safe manner. The user may operate the earthing mechanism 100 to the first position (A) for grounding the remaining electricity in the electrical components of the switchgear 200. The user may operate/rotate the socket 162 that protrudes from the door 160 of the switchgear 200. The rotation of the socket 162 may also rotate the first shaft 142. Since the first shaft 142 is coupled to the second shaft 122, the rotation of the first shaft 142 causes the second shaft 122 to rotate within the casing 124. The rotation of the second shaft 122 is converted to the rotation of the spindle 136 along the vertical axis (A-A') by the conversion mechanism 134. As the spindle 136 rotates abouts the vertical axis (A-A'), the spindle 136 may engage with the threads defined on the inner surface of the bushing 148. The spindle 136 may begin to traverse upwardly as the second shaft 122 rotates and the connector 138 on the spindle 136 may begin to traverse upwardly towards the top end of the insulators 120. Reference is made to Figure 12 which depict the earthing mechanism 100 in the first position (A). The connector 138 may be traversed upwardly along with the spindle 136. The connector 138 may subsequently come in contact with the conductor plug 126.

The electrical components in the switchgear 200 may be connected to the conductor plug 126. The electricity from the electrical components in the switchgear 200 may travel to the conductor plug 126. Subsequently, the electricity from conductor plug 126 is transmitted to the connector 138 that lies in the first position (A) and is in contact with the conductor plug 126. Further, the electricity from the conductor plug 126 may travel through the spindle 136 and the electricity may be grounded. The user may subsequently access the electrical components in the switchgear 200. After the electrical components are serviced, the earthing mechanism 100 may be operated back to the second position (B) where the connector 138 is proximal to the bottom end of the insulators 120. Subsequently, the switchgear 200 may be actuated to an operational state.

In an embodiment, the conductor element 140 accommodated inside the grooves 128 of the conductor plug 126 are spring/elastic conductive material in the shape of the ring. In an embodiment, the conduction of electricity from the conductor plug 126 to the connector 138 is facilitated by the conductor element 140 that in structured as the spring. The conductor element 140 that in structured as the spring enable the conduction of high voltages and the above configuration also hinders/reduces the risk of electrical sparks during conduction of electricity from the conductor plug 126 to the connector 138.

In an embodiment, the rotation of the first shaft 142 may be motorized. The first shaft 142 may be connected to a motor and the motor may suitably rotate the first shaft 142. A button/switch may be configured to the door 160 of the switchgear 200. Actuation of the switch may actuate the motor. The first shaft 142 and the second shaft 122 may subsequently rotate and the spindle 136 may be rotated for traversing the connector 138 to the first position (A) or the second position (B). In an embodiment, the motor may be automatically actuated to traverse the connector 138 to the second position (B) from the first position (A) after grounding the electricity in the switchgear 200.

In an embodiment, the above described earthing mechanism 100 may be accommodated within the insulators 120 of the switchgear 200. The earthing mechanism 100 of the present disclosure is compact and occupies less space. Consequently, a significant amount of volume is saved within the switchgear 200 and the size switchgear 200 may therefore be reduced. In an embodiment, the earthing mechanism 100 of the present disclosure is completely embedded inside the cavity 156 of the insulators 120. Consequently, no sharp edges or surfaces remain exposed inside the switchgear 200. Therefore, the electrical stress within the switchgear 200 is reduced and the premature failure of the earthing mechanism 100 is averted. In an embodiment, the reduction of sharp surfaces or flat surfaces within the switchgear 200 ensures that a non-uniform electric field is reduced. Consequently, the working of the electrical components in the switchgear 200 is not hindered/restricted.

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims e.g., bodies of the appended claims are generally intended as "open" terms e.g., the term "including" should be interpreted as "including but not limited to," the term "having" should be interpreted as "having at least," the term "includes" should be interpreted as "includes but is not limited to," etc.. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" e.g., "a" and/or "an" should typically be interpreted to mean "at least one" or "one or more"; the same holds true for the use of definite articles used to introduce claim recitations. In addition, even if a specific number of an introduced claim recitation is explicitly recited, those skilled in the art will recognize that such recitation should typically be interpreted to mean *at least* the recited number e.g., the bare recitation of "two recitations," without other modifiers, typically means *at least* two recitations, or *two or more* recitations. Furthermore, in those instances where a convention analogous to "at least one of A, B, and C, etc." is used, in general such a construction is intended in the sense one having skill in the art would understand the convention e.g., "a system 108 having at least one of A, B, and C" would include but not be limited to systems that have A alone, B alone, C alone, A and B together, A and C together, B and C together, and/or A, B, and C together, etc.. In those instances, where a convention analogous to "at least one of A, B, or C, etc." is used, in general such a construction is intended in the sense one having skill in the art would understand the convention e.g., "a system 108 having at least one of A, B, or C" would include but not be limited to systems that have A alone, B alone, C alone, A and B together, A and C together, B and C together, and/or A, B, and C together, etc.. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

### Referral numerals:

| Referral numerals | Description |
|---|---|
| 100 | Earthing mechanism |
| 120 | Insulator |
| 120a | Top end of the insulators |
| 120b | Bottom end of the insulators |
| 122 | Second shaft |
| 124 | Casing |
| 126 | Conductor plug |
| 126h | Head |
| 126p | Protrusion |
| 126a | Outer surface of the conductor plug |
| 126b | Inner surface of the conductor plug |
| 128 | Groove |
| 130 | Flexible coupling |
| 132 | Guide member |
| 132a | Outer surface of the guide member |
| 132b | Inner surface of the guide member |
| 134 | Conversion mechanism |
| 136 | Spindle |
| 136a | Threaded profile |
| 138 | Connector |
| 138a | Outer surface of the connector |
| 138b | Inner surface of the connector |
| 138c | Central opening |
| 140 | Conductor element |
| 142 | First shaft |
| 144 | Earthing member |
| 146 | Extension |
| 148 | Bush |
| 150 | Enclosure |
| 152 | Circuit breaker |
| 154 | Bus bar |
| 156 | Cavity |
| 156a | Inner surface of the insulators |
| 158 | Slot |
| 160 | Door |
| 162 | Socket |
| 164 | Top plate |
| 200 | Switchgear |

## Claims

1. An earthing mechanism 100 for earthing a switchgear 200, the earthing mechanism 100 comprising:
a conductor plug 126 positioned in at least one insulator 120 such that at least a portion of the conductor plug 126 extends into the at least one insulator 120 to abut an inner surface of a cavity 156 defined along a vertical axis A-A' within the at least one insulator 120;
a spindle 136 disposed in the cavity 156;
a connector 138 engaged with the spindle 136 wherein, the displacement of the spindle 136 displaces the connector 138 between a first position A and a second position B within the cavity 156; and,
wherein, the connector 138 contacts the conductor plug 126 in the first position A for earthing the switchgear 200.

2. The earthing mechanism 100 of claim 1 wherein the conductor plug 126 is defined by an inner surface and an outer surface wherein, at least a portion of the outer surface of the conductor plug 126 abuts the inner surface of the cavity 156.

3. The earthing mechanism 100 of claim 2 wherein, the inner surface of the conductor plug 126 is defined with at least one groove 128.

4. The earthing mechanism 100 of claim 3 further comprising a conductor element 140 positioned the at least one groove 128 of the conductor plug 126 wherein, the conductor element 140 conducts electricity from the conductor plug 126 to the connector 138, upon contact with the connector 138.

5. The earthing mechanism 100 according to any of the preceding claims further comprising a guide member 132 positioned concentrically within the at least one insulator 120 wherein, an outer surface of the guide member 132 abuts an inner surface of the at least one insulator 120.

6. The earthing mechanism 100 of claim 5 further comprising at least one extension 146 that protrudes from an inner surface of the guide member 132 and at least one slot 158 defined on the outer surface of the connector 138 to receive the at least one extension 146 of the guide member 132.

7. The earthing mechanism 100 according to any of the preceding claims wherein, the spindle 136 is defined with a threaded outer surface and is engaged with a threaded inner surface of the connector 138.

8. The earthing mechanism 100 according to any of the preceding claims wherein, the spindle 136 is of a non- conductive material.

9. The earthing mechanism 100 according to any of the preceding claims further comprises, a second shaft 122 connected to one end of the spindle 136 by a conversion mechanism 134 wherein, the rotation of the second shaft 122 rotates the spindle 136 and displaces the connector 138 along the length of the spindle 136 between the first position A and the second position B.

10. The earthing mechanism 100 according to any of the preceding claims further comprising, a flexible coupling 130 coupled to the connector 138 wherein, the flexible coupling 130 conducts and routes electricity to a ground.

11. The earthing mechanism 100 according to any of the preceding claims wherein, one end of the connector 138 is connected to the spindle 136 and the opposing end of the connector 138 is defined with a flat profile to abut the conductor plug 126 and ground electricity when the connector 138 is displaced to the first position A.

12. A switchgear 200 comprising:
an enclosure 150;
a circuit breaker and a bus bar housed in the enclosure; and
the earthing mechanism 100 according to any of the preceding claims.

13. A switchgear 200 comprising:
an enclosure 150;
a circuit breaker and a bus bar housed in the enclosure; and
an earthing mechanism 100 for earthing the switchgear 200, the earthing mechanism 100 comprising:
a conductor plug 126 positioned in at least one insulator 120 such that at least a portion of the conductor plug 126 extends into a cavity 156 defined in the at least one insulator 120;
a spindle 136 disposed in the cavity 156 of the at least one insulator 120;
a connector 138 movably engaged with the spindle 136 wherein, the spindle 136 is configured to displace the connector 138 between a first position A and a second position B within the cavity 156; and,
wherein, the connector 138 contacts the conductor plug 126 in the first position A for earthing the switchgear 200.

14. The switchgear 200 as claimed in claim 13 wherein, at least three insulators 120 are positioned on a casing 124 in the switchgear 200 and each of the at least three insulators 120 include the earthing mechanism 100 for earthing the switchgear 200 wherein, the earthing mechanism 100 includes:
the conductor plug 126 positioned in each of the at least three insulators 120 such that at least a portion of the conductor plug 126 extends into the cavity 156 defined in each of the at least three insulators 120;
the spindle 136 disposed in the cavity 156 of each of the at least three insulators 120;
the connector 138 movably engaged with the spindle 136 wherein, the spindle 136 is configured to displace the connector 138 between the first position A and the second position B within the cavity 156;
a second shaft 122 connected to one end of the spindle 136 in the earthing mechanism 100 of each of the at least three insulators 120 by a conversion mechanism 134 wherein, the rotation of the second shaft 122 rotates the spindle 136 and displaces the connector 138 along the length of the spindle 136 between the first position A and the second position B; and, wherein, the connector 138 in the earthing mechanism 100 of each of the at least three insulators 120, contacts the conductor plug 126 in the first position A for earthing the switchgear 200.
